(19) Europäisches Patentamt
European Patent Office
Office européen des brevets

(11) **EP 3 719 906 A1**

(12) **EUROPEAN PATENT APPLICATION**
published in accordance with Art. 153(4) EPC

(43) Date of publication:
**07.10.2020 Bulletin 2020/41**

(51) Int Cl.:
**H01M 8/18** (2006.01)

(21) Application number: **17894660.4**

(22) Date of filing: **28.11.2017**

(86) International application number:
**PCT/JP2017/042650**

(87) International publication number:
**WO 2019/106721 (06.06.2019 Gazette 2019/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Sumitomo Electric Industries, Ltd.
Osaka-shi, Osaka 541-0041 (JP)**

(72) Inventor: **IKEUCHI, Atsuo
Osaka-shi
Osaka 541-0041 (JP)**

(74) Representative: **Boult Wade Tennant LLP
Salisbury Square House
8 Salisbury Square
London EC4Y 8AP (GB)**

(54) **REDOX FLOW BATTERY**

(57)    A redox flow battery includes a cell, an electrolyte tank configured to store an electrolyte supplied to the cell, and a circulation mechanism disposed between the cell and the electrolyte tank and configured to circulate the electrolyte. The circulation mechanism includes a suction pipe configured to suck up the electrolyte from an open end thereof in the electrolyte to above an in-tank liquid level of the electrolyte in the electrolyte tank, a circulation pump disposed at an upper end of the suction pipe, an extrusion pipe running from a discharge port of the circulation pump to the cell, and a return pipe running from the cell to the electrolyte tank. $H_L/H_0$ is greater than or equal to 0.4 and $H_S$ is less than or equal to $H_L$, where $H_0$ is a height from an inner bottom surface of the electrolyte tank to the in-tank liquid level, $H_L$ is a length from the open end of the suction pipe to the in-tank liquid level, and $H_S$ is a height from the in-tank liquid level to a center of a suction port of the circulation pump.

**FIG. 5**

Printed by Jouve, 75001 PARIS (FR)

# Description

Technical Field

The present invention relates to a redox flow battery.

Background Art

Patent Literature (PTL) 1 discloses a redox flow battery that includes a cell configured to perform charge and discharge between itself and a power system, an electrolyte tank configured to store an electrolyte supplied to the cell, and a circulation mechanism disposed between the cell and the electrolyte tank and configured to circulate the electrolyte. The circulation mechanism includes a circulation pump, a pipe running from the electrolyte tank to the circulation pump, a pipe running from the circulation pump to the cell, and a pipe running from the cell to the electrolyte tank. The circulation pump is disposed to a side of the electrolyte tank.

Citation List

Patent Literature

PTL 1: Japanese Unexamined Patent Application Publication No. 2012-164530

Summary of Invention

A redox flow battery according to the present disclosure includes a cell, an electrolyte tank configured to store an electrolyte supplied to the cell, and a circulation mechanism disposed between the cell and the electrolyte tank and configured to circulate the electrolyte. The circulation mechanism includes a suction pipe configured to suck up the electrolyte from an open end thereof in the electrolyte to above an in-tank liquid level of the electrolyte in the electrolyte tank, a circulation pump disposed at an upper end of the suction pipe, an extrusion pipe running from a discharge port of the circulation pump to the cell, and a return pipe running from the cell to the electrolyte tank. $H_L/H_0$ is greater than or equal to 0.4 and $H_S$ is less than or equal to $H_L$, where $H_0$ is a height from an inner bottom surface of the electrolyte tank to the in-tank liquid level, $H_L$ is a length from the open end of the suction pipe to the in-tank liquid level, and $H_S$ is a height from the in-tank liquid level to a center of a suction port of the circulation pump.

Brief Description of Drawings

[Fig. 1] Figure 1 illustrates a working principle of a redox flow battery.
[Fig. 2] Figure 2 is a schematic diagram of the redox flow battery.
[Fig. 3] Figure 3 is a schematic diagram of a cell stack.
[Fig. 4] Figure 4 is a schematic diagram of a redox flow battery according to an embodiment.
[Fig. 5] Figure 5 is a schematic diagram of a circulation mechanism included in the redox flow battery according to the embodiment.
[Fig. 6] Figure 6 is a schematic diagram of a circulation mechanism with a suction pipe shorter than that in the circulation mechanism illustrated in Fig. 5. Description of Embodiments

[Problems to be Solved by the Present Disclosure]

In conventional redox flow batteries, a circulation pump is disposed to a side of an electrolyte tank to circulate an electrolyte in a cell. This means that if a pipe running from the electrolyte tank to the circulation pump is damaged, most of the electrolyte in the electrolyte tank may leak out.

Accordingly, an object of the present disclosure is to provide a redox flow battery that can prevent the electrolyte from leaking out of the electrolyte tank even if the pipe running from the electrolyte tank to the circulation pump is damaged.

[Description of Embodiments of the Invention of the Present Application]

In view of the problem described above, the present inventor has studied a configuration for sucking up the electrolyte to above the electrolyte tank. To suck up the electrolyte, it is necessary to consider a net positive suction head required (NPSHr) for the circulation pump and a net positive suction head available (NPSHa) which takes into account suction conditions. NPSHr is a value obtained by converting a minimum suction pressure required to avoid a decrease in pump efficiency caused by cavitation, into an electrolyte level (height) (m). NPSHr is a pump-specific value independent of liquid property or the like. In contrast, NPSHa is a head which takes into account suction conditions. NPSHa is a value which represents a margin against cavitation during suction of the electrolyte and can be determined by the following equation. To avoid the cavitation, NPSHr < NPSHa needs to be satisfied:

$$NPSHa\ (m) = [(P_A\text{-}P_V) \times 10^6/p\cdot g] - H_S - H_{fs}$$

where

$P_A$ is absolute pressure (MPa) applied at the in-tank liquid level in the electrolyte tank;
$P_V$ is the vapor pressure (MPa) of electrolyte corresponding to temperature at the suction port of the circulation pump;

p is electrolyte density ($kg/m^3$);

g is acceleration of gravity (9.8 $m/s^2$);

$H_S$ is height (m) from the in-tank liquid level in the electrolyte tank to the center of the suction port of the circulation pump; and

$H_{fs}$ is head loss (m) in the suction pipe.

Note that $H_{fs}$ can be determined, for example, by the Darcy-Weisbach equation described below:

$$\text{head loss h (m)} = \alpha \cdot \lambda \cdot (L/d) \cdot (v^2/2g)$$

where

$\alpha$ is safety factor (e.g., 1.3);

$\lambda$ is the coefficient of pipe friction;

L is pipe length or its equivalent length (m);

d is pipe inside diameter (m); and

v is electrolyte flow rate (m/s).

For the redox flow battery, it is also necessary to take into account the utilization ratio of the electrolyte in the electrolyte tank. The redox flow battery performs charge and discharge using changes in the valence of active material ions contained in the electrolyte. Therefore, if the suction pipe for sucking up the electrolyte is open at a shallow level in the electrolyte, it is difficult to create convection in the electrolyte, and effective use of the active materials in the electrolyte tank cannot be achieved. To create convection in the electrolyte and increase the utilization ratio of the electrolyte, it is preferable to suck up the electrolyte from a deep level in the electrolyte. However, as the length of the suction pipe increases, the suction pipe loss $H_{fs}$ increases and NPSHa decreases as expressed by the derivation equation described above. Therefore, the suction height $H_S$ (also referred to as actual suction head) needs to be adjusted to satisfy NPSHr < NPSHa.

The present inventor has further studied the configuration for sucking up the electrolyte and has found out that by defining the relationship between $H_S$ and $H_L$, it is possible to reduce the size of the circulation pump included in the circulation mechanism and reduce power consumption required for operating the redox flow battery. Embodiments of the invention of the present application are listed and described below.

<1> A redox flow battery according to an embodiment includes a cell, an electrolyte tank configured to store an electrolyte supplied to the cell, and a circulation mechanism disposed between the cell and the electrolyte tank and configured to circulate the electrolyte. The circulation mechanism includes a suction pipe configured to suck up the electrolyte from an open end thereof in the electrolyte to above an in-tank liquid level of the electrolyte in the electrolyte tank, a circulation pump disposed at an upper end of the suction pipe, an extrusion pipe running from a discharge port of the circulation pump to the cell, and a return pipe running from the cell to the electrolyte tank. $H_L/H_0$ is greater than or equal to 0.4 and $H_S$ is less than or equal to $H_L$, where $H_0$ is a height from an inner bottom surface of the electrolyte tank to the in-tank liquid level, $H_L$ is a length from the open end of the suction pipe to the in-tank liquid level, and $H_S$ is a height from the in-tank liquid level to a center of a suction port of the circulation pump. When the electrolyte is circulated from the electrolyte tank to the cell, the electrolyte is sucked up to above the in-tank liquid level. With this configuration, even if the suction pipe running from the electrolyte tank to the circulation pump is damaged, the electrolyte is less likely to leak out of the electrolyte tank. This is because damage to the suction pipe breaks hermeticity of the suction pipe and allows gravity to cause the electrolyte in the suction pipe to return to the electrolyte tank.

When the distance $H_L$ from the in-tank liquid level of the electrolyte to the open end of the suction pipe in the electrolyte is small, that is, when the electrolyte is sucked up near the in-tank liquid level, the electrolyte on the bottom side of the electrolyte tank tends not to be used. Therefore, even when the capacity of the electrolyte tank is increased, it is difficult to achieve the effect of improving the hour-rate capacity of the redox flow battery. On the other hand, in the case of $H_L/H_0 \geq 0.4$, that is, when the ratio of the distance $H_L$ to the depth $H_0$ of the electrolyte is 40% or more, the electrolyte can be sucked up at a deep level in the electrolyte and this improves the utilization ratio of the electrolyte in the electrolyte tank.

Increased $H_L$ means increased friction loss between the suction pipe and the electrolyte. As described above, NPSHa is a value obtained by subtracting the suction height $H_S$ (actual suction head) and the suction pipe loss $H_{fs}$ from a theoretical threshold. Therefore, it is important to adjust $H_S$ in accordance with an increase in $H_{fs}$. Specifically, by making $H_S$ less than or equal to $H_L$ ($H_S \leq H_L$), the pump power of the circulation pump for sucking up and circulating the electrolyte can be kept low. This makes it possible to reduce power consumption for operating the redox flow battery and achieve efficient operation of the redox flow battery.

<2> In an aspect of the redox flow battery according to the embodiment, the circulation pump may be a self-priming pump having a pump body including an impeller and a driving unit configured to rotate the impeller, and the pump body may be disposed above the in-tank liquid level.

The configuration described above facilitates maintenance of the circulation pump. This is because by stopping the circulation pump for maintenance of the circulation pump, the electrolyte in the suction pipe is returned to the electrolyte tank and this saves the trouble of taking the impeller out of the electrolyte. Depending on the type of circulation pump, however, the impeller may be disposed in the electrolyte while the driving unit is disposed above the in-tank liquid level of the electrolyte. Maintenance of such a circulation pump involves the trouble of taking the impeller out of the electrolyte. The electrolyte may spatter when the impeller is taken out.

<3> In an aspect of the redox flow battery according to the embodiment in which the pump body is disposed above the in-tank liquid level, the circulation pump may be provided with a priming tank disposed between the pump body and the suction pipe.

In the configuration with the priming tank, sucking the electrolyte in the priming tank with the circulation pump reduces gas-phase pressure in the priming tank and causes the electrolyte in the electrolyte tank to be sucked up into the priming tank. With this configuration, initial suction of the electrolyte stored in the electrolyte tank only involves pouring the electrolyte into the priming tank and operating the circulation pump. The initial suction operation is thus carried out easily. In the configuration without the priming tank, the electrolyte cannot be sucked up until completion of preparation which involves the trouble of filling the circulation pump and the suction pipe with the electrolyte.

<4> In another aspect of the redox flow battery according to the embodiment in which the pump body is disposed above the in-tank liquid level, the redox flow battery may include a cell chamber disposed on an upper surface of the electrolyte tank and containing the cell therein, and the pump body may be disposed in the cell chamber.

With this configuration, even if the electrolyte leaks near the pump body, the leaked electrolyte can be easily kept inside the cell chamber. This facilitates treatment of the leaked electrolyte and improves safety of the treatment.

[Details of Embodiments of the Invention of the Present Application]

Embodiments of a redox flow battery according to the present disclosure will now be described. Note that the invention of the present application is not limited to the configurations described in the embodiments and is defined by the claims. All changes that fall within meanings and scopes equivalent to the claims are therefore intended to be embraced by the claims.

<First Embodiment>

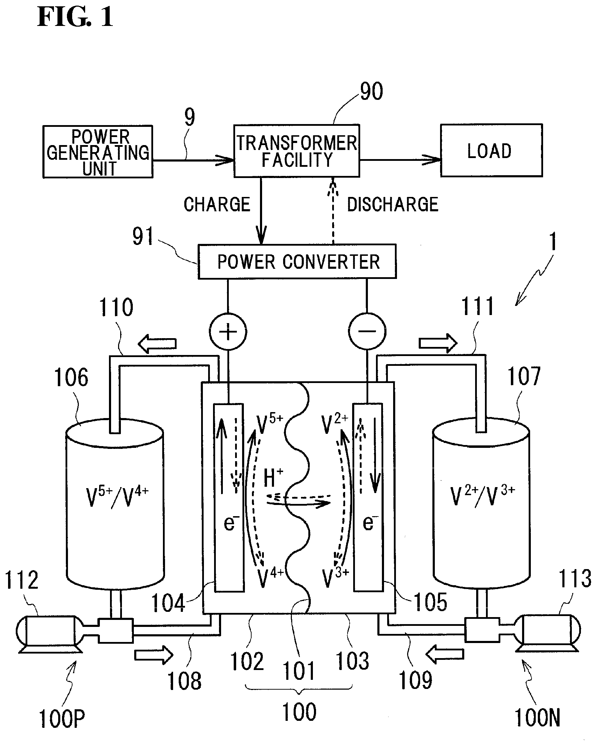

Before description of a redox flow battery according to an embodiment, a basic configuration of a redox flow battery (hereinafter referred to as an RF battery) will be described on the basis of Figs. 1 to 3.

<<Basic Configuration of RF Battery>>

An RF battery is an electrolyte-circulating storage battery used, for example, to store electricity generated by new energy, such as solar photovoltaic energy or wind energy. A working principle of an RF battery 1 is described on the basis of Fig. 1. The RF battery 1 is a battery that performs charge and discharge using a difference between the oxidation-reduction potential of active material ions (vanadium ions in Fig. 1) contained in a positive electrolyte and the oxidation-reduction potential of active material ions (vanadium ions in Fig. 1) contained in a negative electrolyte. The RF battery 1 is connected through a power converter 91 to a transformer facility 90 in a power system 9 and performs charge and discharge between itself and the power system 9. When the power system 9 is a power system that performs alternating-current power transmission, the power converter 91 is an alternating current/direct current converter. When the power system is a power system that performs direct-current power transmission, the power converter 91 is a direct current/direct current converter. The RF battery 1 includes a cell 100 divided into a positive electrode cell 102 and a negative electrode cell 103 by a membrane 101 that allows hydrogen ions to pass therethrough.

The positive electrode cell 102 includes a positive electrode 104. A positive electrolyte tank 106 that stores a positive electrolyte is connected through ducts 108 and 110 to the positive electrode cell 102. The duct 108 is provided with a circulation pump 112. These components 106, 108, 110, and 112 form a positive electrolyte circulation mechanism 100P that circulates the positive electrolyte. Similarly, the negative electrode cell 103 includes a negative electrode 105. A negative electrolyte tank 107 that stores a negative electrolyte is connected through ducts 109 and 111 to the negative electrode cell 103. The duct 109 is provided with a circulation pump 113. These components 107, 109, 111, and 113 form a negative electrolyte circulation mechanism 100N that circulates the negative electrolyte. During charge and discharge, the electrolytes stored in the electrolyte tanks 106 and 107 are circulated in the cells 102 and 103 by the circulation pumps 112 and 113. When no charge or discharge takes place, the circulation pumps 112 and 113 are at rest and the electrolytes do not circulate.

[Cell Stack]

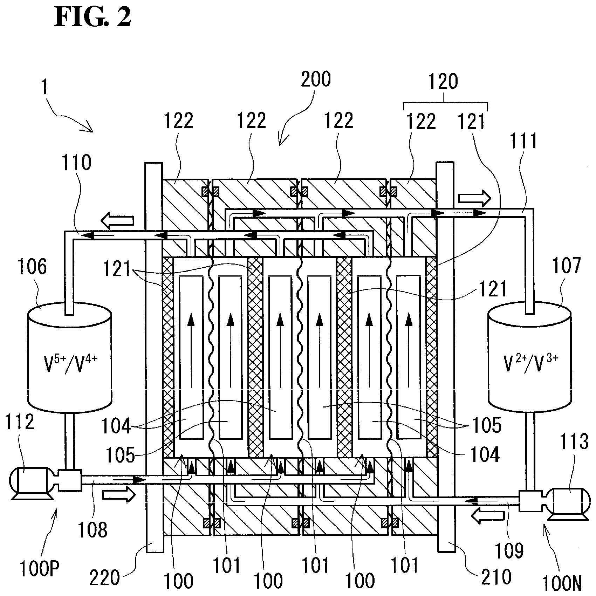

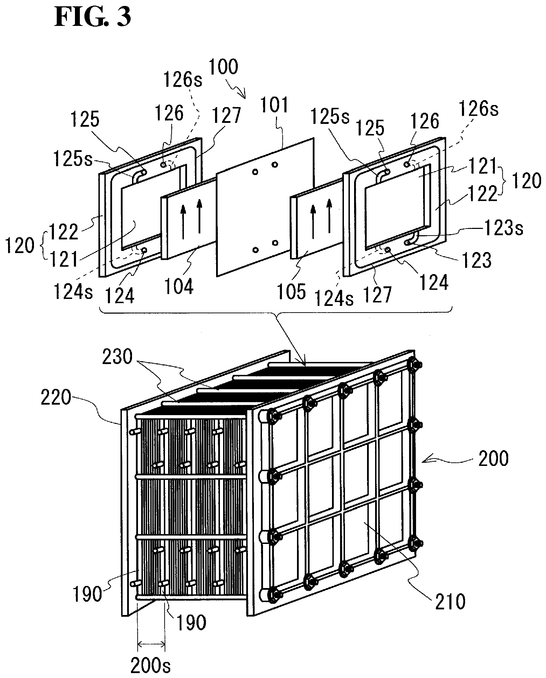

The cell 100 is typically formed inside a structure called a cell stack 200, such as that illustrated in Figs. 2 and 3. The cell stack 200 is formed by sandwiching a layered structure called a substack 200s (see Fig. 3) with two end plates 210 and 220 on both sides, and then fastening the resulting structure with a fastening mechanism 230. The configuration illustrated in Fig. 3 uses more than one substack 200s.

The substack 200s (see Fig. 3) is formed by stacking a plurality of sets of a cell frame 120, the positive electrode 104, the membrane 101, and the negative electrode 105 in layers and sandwiching the resulting layered body between supply/discharge plates 190 (see the lower part of Fig. 3; not shown in Fig. 2).

The cell frame 120 includes a frame body 122 having a through-window and a bipolar plate 121 configured to close the through-window. That is, the frame body 122 supports the outer periphery of the bipolar plate 121. The cell frame 120 can be made, for example, by forming the frame body 122 in such a manner that it is integral with the outer periphery of the bipolar plate 121. Alternatively, the cell frame 120 may be made by preparing the frame body 122 having a thin portion along the outer edge of the through-window and the bipolar plate 121 produced independent of the frame body 122, and then fitting the outer periphery of the bipolar plate 121 into the thin portion of the frame body 122. The positive electrode 104 is disposed in such a manner as to be in contact with one side of the bipolar plate 121 of the cell frame 120, and the negative electrode 105 is disposed in such a manner as to be in contact with the other side of the bipolar plate 121. In this configuration, one cell 100 is formed between the bipolar plates 121 fitted into adjacent cell frames 120.

The circulation of the electrolyte into the cell 100 through the supply/discharge plates 190 (see Fig. 3) is made by liquid supply manifolds 123 and 124 and liquid discharge manifolds 125 and 126 formed in each cell frame 120. The positive electrolyte is supplied from the liquid supply manifold 123 through an inlet slit 123s (see a curved portion indicated by a solid line) formed on one side of the cell frame 120 (i.e., on the front side of the drawing) to the positive electrode 104, and discharged through an outlet slit 125s (see a curved portion indicated by a solid line) formed in the upper part of the cell frame 120 into the liquid discharge manifold 125. Similarly, the negative electrolyte is supplied from the liquid supply manifold 124 through an inlet slit 124s (see a curved portion indicated by a broken line) formed on the other side of the cell frame 120 (i.e., on the back side of the drawing) to the negative electrode 105, and discharged through an outlet slit 126s (see a curved portion indicated by a broken line) formed in the upper part of the cell frame 120 into the liquid discharge manifold 126. A ring-shaped sealing member 127, such as an O-ring or flat gasket, is provided between adjacent cell frames 120, and this prevents leakage of the electrolyte from the substack 200s.

[Electrolyte]

An electrolyte may contain vanadium ions as positive and negative active materials, or may contain manganese and titanium ions as positive and negative active materials, respectively. Other electrolytes of known composition may also be used.

<<RF Battery according to Embodiments>>

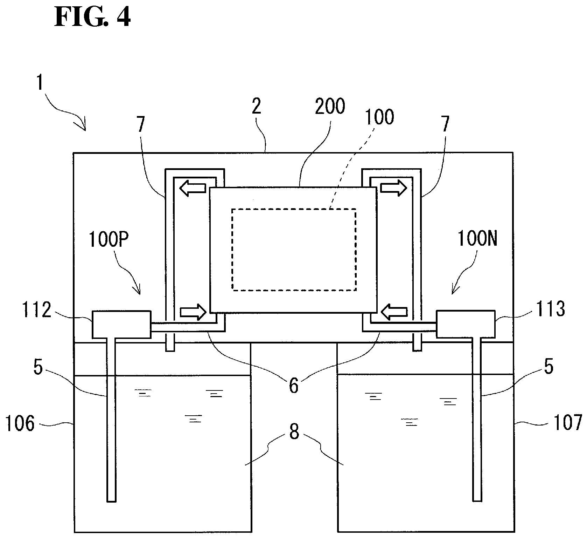

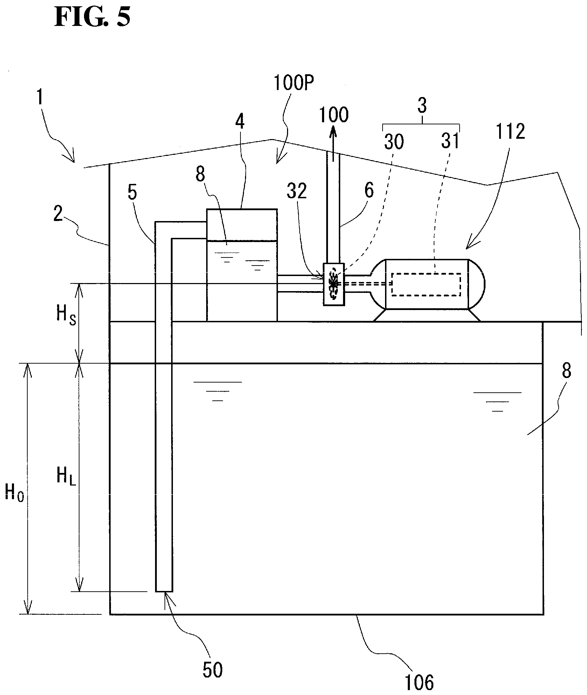

On the basis of the basic configuration of the RF battery 1 described above, the RF battery 1 according to embodiments will be described on the basis of Figs. 4 and 5. Figure 4 is a schematic diagram of the RF battery 1, and Fig. 5 is a schematic diagram illustrating the positive electrolyte circulation mechanism 100P and its neighboring region of the RF battery 1. The cell 100 and a return pipe 7 are not shown in Fig. 5.

As illustrated in Fig. 4, the components of the RF battery 1 of the present example are in three sections. The first section is a cell chamber 2 that contains therein the cell stack 200 including the cell 100 and the circulation mechanisms 100P and 100N. In the present example, the cell chamber 2 is formed by a container. The second section is a positive tank container serving as the positive electrolyte tank 106. The third section is a negative tank container serving as the negative electrolyte tank 107. In the present example, the container forming the cell chamber 2 is disposed to extend over both the tank containers.

As containers forming the cell chamber 2 and the electrolyte tanks 106 and 107, standard containers, such as maritime containers, can be used. Container sizes may be appropriately selected in accordance with the capacity or output of the RF battery 1. For example, when the RF battery 1 has a large (or small) capacity, the electrolyte tanks 106 and 107 may be formed by large (or small) containers. Examples of the containers include international freight containers compliant with the ISO standard (e.g., ISO 1496-1:2013). Typically, 20-foot containers and 40-foot containers, and 20-foot high-cube containers and 40-foot high-cube containers higher than the 20-foot and 40-foot containers, can be used.

In the configuration illustrated in Fig. 4, the circulation mechanism 100P (100N) includes a suction pipe 5, the circulation pump 112 (113), an extrusion pipe 6, and the return pipe 7. The suction pipe 5 is positioned, at an open end thereof, in an electrolyte 8 and sucks up the electrolyte 8 to above the electrolyte tank 106 (107). The extrusion pipe 6 is a pipe that runs from the discharge port of the circulation pump 112 (113) to the cell 100. The extrusion pipe 6 may correspond to the duct 108 (109) illustrated in Fig. 1. The return pipe 7 is a pipe that runs from the cell 100 to the electrolyte tank 106 (107). The return pipe 7 may correspond to the duct 110 (111) illustrated in Fig. 1. The return pipe 7 is preferably spaced from the suction pipe 5 in the planar direction along the liquid surface in the tank. For example, the return pipe 7 and the suction pipe 5 are preferably arranged to be symmetric with respect to the center of the liquid surface in the tank. This is because making the pipes 5 and 7 spaced apart can facilitate convection of the electrolyte.

As illustrated in Fig. 5, the circulation pump 112 is a self-priming pump having a pump body 3 including an impeller 30 and a driving unit 31 that rotates the impeller 30. The pump body 3 is disposed in the cell chamber 2 and is not immersed in the electrolyte 8. The circulation pump 113 illustrated in Fig. 4 has the same configuration as the circulation pump 112 illustrated in Fig. 5.

The circulation pump 112 is provided with a priming tank 4 disposed between the pump body 3 and the suction pipe 5. In the configuration with the priming tank 4, sucking the electrolyte 8 in the priming tank 4 with the circulation pump 112 reduces gas-phase pressure in the priming tank 4 and causes the electrolyte 8 in the electrolyte tank 106 to be sucked up into the priming tank 4. With this configuration, initial suction of the electrolyte 8 stored in the electrolyte tank 106 only involves pouring the electrolyte 8 into the priming tank 4 and operating the circulation pump 112. The initial suction operation is thus carried out easily. In the configuration with the priming tank 4, a pipe that connects the pump body 3 to the priming tank 4 is preferably provided with a valve (not shown). For maintenance of the pump body 3, the pump body 3 is removed from the circulation mechanism 100P after the valve is closed.

The RF battery 1 illustrated in Fig. 4 is configured in such a manner that the electrolyte 8 is sucked up to above the electrolyte tank 106 (107). With this configuration, even if the suction pipe 5 running from the electrolyte tank 106 (107) to the circulation pump 112 (113) is damaged, the electrolyte 8 is less likely to leak out of the electrolyte tank 106 (107). This is because damage to the suction pipe 5 breaks hermeticity of the suction pipe 5 and allows gravity to cause the electrolyte 8 in the suction pipe 5 to return to the electrolyte tank 106 (107). The pump body 3 of the circulation pump 112 (113) of the present example is not immersed in the electrolyte 8, and this facilitates maintenance of the circulation pump 112 (113). This is because by simply stopping the circulation pump 112 (113), the electrolyte 8 in the suction pipe 5 is returned to the electrolyte tank 106 (107) and this saves the trouble of taking the impeller 30 (see Fig. 5) out of the electrolyte 8.

In the RF battery 1, the pump body 3 is disposed in the cell chamber 2 on the upper surface of the electrolyte tank 106. Therefore, even if the electrolyte 8 leaks near the pump body 3, the leaked electrolyte 8 can be easily kept inside the cell chamber 2. This facilitates treatment of the leaked electrolyte 8 and improves safety of the treatment.

In the RF battery 1 of the embodiment, $H_L/H_0$ is greater than or equal to 0.4 and $H_S$ is less than or equal to $H_L$, where

- $H_0$ is a height from the inner bottom surface of the electrolyte tank 106 to the in-tank liquid level of the electrolyte 8;
- $H_L$ is a length from an open end 50 of the suction pipe 5 to the in-tank liquid level; and
- $H_S$ is a suction height (also referred to as an actual suction head) from the in-tank liquid level to the center of a suction port 32 of the circulation pump 112.

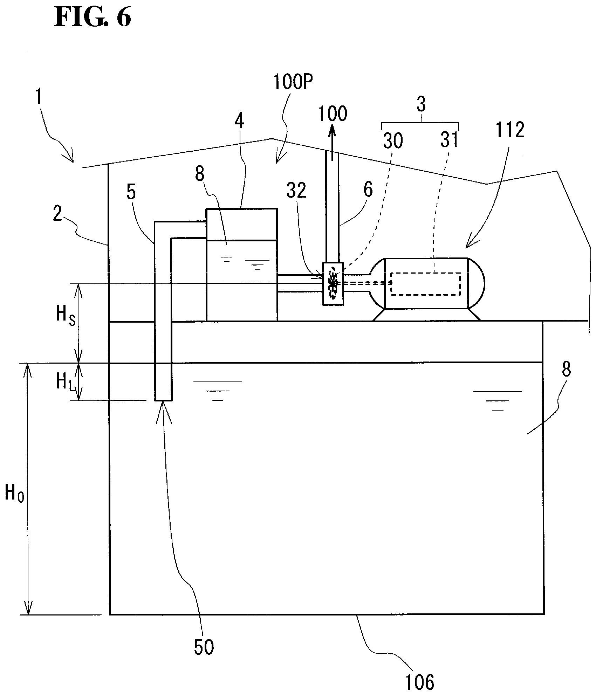

In the case of $H_L/H_0 \geq 0.4$, that is, when the ratio of distance $H_L$ to the depth $H_0$ of the electrolyte 8 is 40% or more, the electrolyte 8 can be sucked up at a deep level in the electrolyte 8 and the utilization ratio of the electrolyte 8 in the electrolyte tank 106 can be increased. In the case of $H_L/H_0 < 0.4$ as illustrated in Fig. 6, the liquid utilization ratio is low. To increase the utilization ratio of the electrolyte 8, it is preferable that $H_L/H_0 \geq 0.6$ be satisfied, and that even $H_L/H_0 \geq 0.8$ or $H_L/H_0 \geq 0.9$ be satisfied.

Increased $H_L$ means increased friction loss between the suction pipe 5 and the electrolyte 8. As described at the beginning of "Description of Embodiments of the Invention of the Present Application", NPSHa is a value obtained by subtracting the suction height $H_S$ and the suction pipe loss $H_{fs}$ from a theoretical threshold. Therefore, it is important to adjust $H_S$ in accordance with an increase in $H_{fs}$. Specifically, by satisfying $H_S \leq H_L$, the pump power of the circulation pump 112 (i.e., power of the driving unit 31) for sucking up and circulating the electrolyte 8 can be kept low. This makes it possible to reduce power consumption for operating the RF battery 1 and achieve efficient operation of the RF battery 1.

<Calculation Example>

The present calculation example uses the circulation pump 112 with NPSHr = 2 m to determine NPSHa by varying $H_L$ and $H_S$ and examines the possibility of power reduction of the circulation pump 112.

<<Example 1>>

Preconditions for the calculation are as follows:

- suction height (actual suction head) $H_S = 0.5$ m;
- electrolyte depth $H_0 = 2.8$ m;
- length $H_L$ of the suction pipe 5 in liquid = 2.7 m;
- total head including head loss in each part = 29.5 m;
- electrolyte flow rate Q = 960 liters/minute; and
- inside diameter d of the suction pipe 5 = 0.1 m.

In Example 1, where the liquid utilization ratio $H_L/H_0 \approx 0.96$, the efficiency of utilization of active material ions in the electrolyte is fully ensured. In Example 1, $H_S \leq H_L$ is satisfied and NPSHa $\approx 8.71$ m. In this example, where NPSHr < NPSHa is satisfied, the electrolyte can be circulated without problems.

<<Example 2>>

Example 2 shows a calculation example for a configuration with $H_S > H_L$. Specifically, preconditions for the calculation are the same as those in Example 1, except for $H_S = 3.0$ m (greater than $H_L$) and the total head (30.0 m). The liquid utilization ratio in Example 2 is the same as that in Example 1, but NPSHa $\approx 6.21$ m here. Again, NPSHr < NPSHa is satisfied, and the electrolyte can be circulated without problems. However, since larger $H_S$ requires more pump power, reduction of pump power is more effectively achieved in Example 1 than in Example 2.

<<Overview>>

A power reduction rate between Examples 1 and 2, where the utilization ratio of active materials in the electrolyte is high, is determined. Pump power is reduced by reducing head loss (i.e., reducing the total head). The power reduction rate between Examples 1 and 2 can be determined by [(total head in Example 2)-(total head in Example 1)]/(total head in Example 2) × 100. This shows that the power required in Example 1 is 1.7% less than that in Example 2. That is, with the configuration of Example 1, the amount of power required for operating the RF battery 1 is reduced and efficient operation of the RF battery 1 is ensured.

<Applications>

For power generation by natural energy, such as solar photovoltaic energy or wind energy, the RF battery according to the embodiment can be used as a storage battery that aims, for example, to stabilize the output of power generation, store electricity when there is a surplus of generated power, and provide load leveling. The RF battery according to the present embodiment may be installed in a general power plant and used as a large-capacity storage battery system that aims to provide a measure against momentary voltage drops or power failure and to provide load leveling.

Reference Signs List

1: redox flow battery (RF battery)
2: cell chamber
3: pump body
30: impeller, 31: driving unit, 32: suction port
4: priming tank
5: suction pipe, 50: open end
6: extrusion pipe
7: return pipe
8: electrolyte
9: power system, 90: transformer facility, 91: power converter
100: cell, 101: membrane, 102: positive electrode cell, 103: negative electrode cell

100P: positive electrolyte circulation mechanism, 100N: negative electrolyte circulation mechanism
104: positive electrode, 105: negative electrode, 106: positive electrolyte tank
107: negative electrolyte tank, 108, 109, 110, 111: duct
112, 113: circulation pump
120: cell frame
121: bipolar plate, 122: frame body
123, 124: liquid supply manifold, 125, 126: liquid discharge manifold
123s, 124s: inlet slit, 125s, 126s: outlet slit
127: ring-shaped sealing member

200: cell stack

190: supply/discharge plate, 200s: substack
210, 220: end plate
230: fastening mechanism

Claims

1. A redox flow battery comprising a cell, an electrolyte tank configured to store an electrolyte supplied to the cell, and a circulation mechanism disposed between the cell and the electrolyte tank and configured to circulate the electrolyte,
wherein the circulation mechanism includes
a suction pipe configured to suck up the electrolyte from an open end thereof in the electrolyte to above an in-tank liquid level of the electrolyte in the electrolyte tank,
a circulation pump disposed at an upper end of the suction pipe,
an extrusion pipe running from a discharge port of the circulation pump to the cell, and
a return pipe running from the cell to the electrolyte tank; and
$H_L/H_0$ is greater than or equal to 0.4 and $H_S$ is less than or equal to $H_L$, where $H_0$ is a height from an inner bottom surface of the electrolyte tank to the in-tank liquid level, $H_L$ is a length from the open end of the suction pipe to the in-tank liquid level, and $H_S$ is a height from the in-tank liquid level to a center of a suction port of the circulation pump.

2. The redox flow battery according to Claim 1, wherein the circulation pump is a self-priming pump having a pump body including an impeller and a driving unit configured to rotate the impeller; and
the pump body is disposed above the in-tank liquid level.

3. The redox flow battery according to Claim 2, wherein the circulation pump is provided with a priming tank disposed between the pump body and the suction pipe.

4. The redox flow battery according to Claim 2 or 3, further comprising a cell chamber disposed on an upper surface of the electrolyte tank and containing the cell therein,

wherein the pump body is disposed in the cell chamber.

**FIG. 1**

# FIG. 2

FIG. 3

**FIG. 4**

**FIG. 5**

## FIG. 6

## INTERNATIONAL SEARCH REPORT

International application No.

PCT/JP2017/042650

### A. CLASSIFICATION OF SUBJECT MATTER
Int. Cl. H01M8/18(2006.01)i, H01M8/04(2016.01)i

According to International Patent Classification (IPC) or to both national classification and IPC

### B. FIELDS SEARCHED

Minimum documentation searched (classification system followed by classification symbols)
Int. Cl. H01M8/18, H01M8/04

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-514604 A (REDFLOW PTY LTD.) 25 April 2013, paragraphs [0026], [0028], [0031], [0032], fig. 2-4 & WO 2011/072339 A1, page 6, lines 11-17, page 6, lines 25-32, page 7, lines 15-28, fig. 2-4 & US 2012/0308867 A1 & CN 102714295 A | 1 |
| Y | | 2-4 |
| Y | JP 2012-169283 A (PREMIUM POWER CORP.) 06 September 2012, paragraph [0020] & WO 2006/081514 A2, page 6, lines 21-25 & US 2006/0251957 A1 & EP 2320498 A1 & CN 101223655 A | 2-4 |
| A | US 2016/0006051 A1 (UNIENERGY TECHNOLOGIES, LLC) 07 January 2016 & WO 2016/007555 A1 | 1-4 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24.01.2018 | 06.02.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2017/042650

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-102079 A (SUMITOMO ELECTRIC INDUSTRIES, LTD.) 13 April 2001 (Family: none) | 1-4 |
| A | JP 2013-25963 A (SUMITOMO ELECTRIC INDUSTRIES, LTD.) 04 February 2013 (Family: none) | 1-4 |

Form PCT/ISA/210 (continuation of second sheet) (January 2015)

**EP 3 719 906 A1**

### Patent documents cited in the description

- JP 2012164530 A